# EUROPÄISCHE PATENTANMELDUNG

(11) **EP 3 326 835 A1**
(43) Veröffentlichungstag der Anmeldung: **30.05.2018**
(21) Anmeldenummer: 16200678.7
(22) Anmeldetag: 25.11.2016
(51) Int. Cl.: B44C 5/04, B32B 5/00, B29C 41/00, B29C 41/28, B32B 27/00, B29C 43/48, C08J 5/00, C08K 3/00, C08K 7/02

(54) **TRÄGERMATERIAL FÜR EIN DEKORIERTES WAND- ODER BODENPANEEL**

(71) Anmelder: Akzenta Paneele + Profile GmbH, 56759 Kaisersesch (DE)
(72) Erfinder: HANNIG, Hans-Jürgen, 51427 Bergisch Gladbach (DE); HOFF, Egon, 56869 Mastershausen (DE)
(74) Vertreter: Michalski Hüttermann & Partner Patentanwälte mbB

(57) **Zusammenfassung**

Die vorliegende Erfindung schlägt ein Trägermaterial zur Herstellung eines Trägers (12) für ein dekoriertes Wand- oder Bodenpaneel (10) vor, wobei das Trägermaterial (14) ein einen Kunststoff aufweisendes Matrixmaterial, ein Feststoffmaterial und ein Fasermaterial aufweist, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial, von > 20 Gew.-% bis ≤ 70 Gew.-%, insbesondere von ≥ 30 Gew.-% bis ≤ 55 Gew.-%, insbesondere von ≥ 35 Gew.-% bis ≤ 45 Gew.-%, vorliegt und wobei das Feststoffmaterial, bezogen auf das Trägermaterial, in einer Menge von ≥ 30 Gew.-% bis ≤ 75 Gew.-%, insbesondere von ≥ 40 Gew.-% bis ≤ 65 Gew.-%, insbesondere von ≥ 45 Gew.-% bis ≤ 60 Gew.-%, vorliegt und wobei das Fasermaterial, bezogen auf das Trägermaterial, in einer Menge von > 0 Gew.-% bis ≤ 15 Gew.-%, insbesondere von ≥ 3 Gew.-% bis ≤ 20 Gew.-%, vorliegt, und wobei das Matrixmaterial, das Fasermaterial und das Feststoffmaterial gemeinsam, bezogen auf das Trägermaterial (20), in einer Menge von ≥ 95 Gew.-%, insbesondere ≥ 97 Gew.-%, vorliegen.

## Beschreibung

Die vorliegende Erfindung betrifft ein Trägermaterial zum Herstellen eines dekorierten Wand- oder Bodenpaneels. Die vorliegende Erfindung betrifft ferner ein dekoriertes Paneel, das ein derartiges Trägermaterial aufweist, sowie ein Verfahren zum Herstellen eines dekorierten Wand- oder Bodenpaneels.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Aus dem Dokument EP 2 829 415 A1 ist ein Verfahren zur Herstellung eines dekorierten Wand- oder Bodenpaneels bekannt, bei dem ausgehend von einem granularen Trägermaterial ein Träger und anschließende ein Paneel geformt wird. Bei einem derartigen Verfahren kann beispielsweise ein WPC als Trägermaterial Verwendung finden.

Das Dokument DE 35 11 046 C2 beschreibt ein antistatisches, wärme- und druckverfestigtes Laminat, bestehend aus einer unteren Kernschicht, die eine Mehrzahl an faserigen Schichten aufweist, und einer auf der Kernschicht angeordneten dekorativen Zellulosfasern enthaltenen Deckschicht.

Derartige Lösungen können unter Umständen noch Verbesserungspotential bieten. Verbesserungspotential kann sich dabei insbesondere bezüglich der Stabilität, der Feuchteresistenz und der Wärmeresistenz bieten.

Es ist daher die Aufgabe der vorliegenden Erfindung, ein verbessertes Wand- oder Bodenpaneel und/oder ein Verfahren zum Herstellen eines solchen bereitzustellen.

Gelöst wird diese Aufgabe durch ein Trägermaterial gemäß Anspruch 1. Gelöst wird diese Aufgabe ferner durch ein Paneel gemäß Anspruch 9 sowie durch ein Verfahren gemäß Anspruch 10. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Trägermaterial zur Herstellung eines Trägers für ein dekoriertes Wand- oder Bodenpaneel vorgeschlagen. Das Trägermaterial weist ein einen Kunststoff aufweisendes Matrixmaterial, ein Feststoffmaterial und ein Fasermaterial auf, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial, von ≥ 20 Gew.-% bis ≤ 70 Gew.-%, insbesondere von ≥ 30 Gew.-% bis ≤ 55 Gew.-%, insbesondere von ≥ 35 Gew.-% bis ≤ 45 Gew.-%, vorliegt und wobei das Feststoffmaterial, bezogen auf das Trägermaterial, in einer Menge von ≥ 30 Gew.-% bis ≤ 75 Gew.-%, insbesondere von ≥ 40 Gew.-% bis ≤ 65 Gew.-%, insbesondere von ≥ 45 Gew.-% bis ≤ 60 Gew.-%, vorliegt und wobei das Fasermaterial, bezogen auf das Trägermaterial, in einer Menge von > 0 Gew.-% bis ≤ 20 Gew.-%, insbesondere von ≥ 3 Gew.-% bis ≤ 12 Gew.-%, etwa von ≥ 5 Gew.-% bis ≤ 10 Gew.-% vorliegt, und wobei das Matrixmaterial, das Fasermaterial und das Feststoffmaterial gemeinsam, bezogen auf das Trägermaterial (20), in einer Menge von ≥ 95 Gew.-%, insbesondere ≥ 97 Gew.-%, vorliegen.

Es konnte in überraschender Weise gezeigt werden, dass ein derartiges Trägermaterial das Herstellen eines Wand- oder Bodenpaneels mit einer sehr guten Stabilität ermöglicht, wobei weiterhin eine sehr gute Feuchteresistenz ermöglicht werden kann, insbesondere mit einer reduzierten feuchte- oder hitzebedingten Quellung.

Der vorbezeichnete Träger dient insbesondere dem Einsatz in einem dekorierten Wand- oder Bodenpaneel.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "Träger" kann insbesondere eine in einem fertig gestellten Paneel als Kern beziehungsweise als Basislage dienende Lage verstanden werden. Beispielsweise kann der Träger dem Paneel bereits eine geeignete Stabilität verleihen oder zu dieser beitragen.

Entsprechend kann unter einem Trägermaterial ein derartiges Material verstanden werden, welches den Träger zumindest zu einem mehrwiegenden Teil bildet. Insbesondere kann der Träger aus dem Trägermaterial bestehen.

Ein vorbeschriebenes Trägermaterial weist ein einen Kunststoff aufweisendes Matrixmaterial, ein Feststoffmaterial und ein Fasermaterial auf.

Das Matrixmaterial dient insbesondere dazu, bei dem fertig hergestellten Träger das Feststoffmaterial und das Fasermaterial aufzunehmen beziehungsweise einzubetten. Das Matrixmaterial weist dabei einen Kunststoff oder eine Kunststoffmischung auf.

In Abhängigkeit des gewünschten Anwendungsgebietes und der gewünschten Eigenschaften des Paneels können die Anteile an Matrixmaterial, Fasermaterial und Feststoffmaterial wählbar sein. Dadurch kann eine gute Adaptierbarkeit an das gewünschte Anwendungsgebiet möglich werden. Grundsätzlich kann es jedoch bevorzugt sein, dass der Anteil des Feststoffmaterials größer oder gleich dem Anteil des Matrixmaterials ist und dass der Anteil des Fasermaterials geringer ist als der Anteil des Matrixmaterials und geringer ist als der Anteil des Feststoffmaterials.

Bezüglich des einen Kunststoff aufweisenden, beispielsweise aus einem Kunststoff oder einer Kunststoffmischung bestehenden Matrixmaterials ist es vorgesehen, dass dieses in einer Menge, bezogen auf das Trägermaterial, von ≥ 20 Gew.-% bis ≤ 70 Gew.-%, insbesondere von ≥ 30 Gew.-% bis ≤ 55 Gew.-%, insbesondere von ≥ 35 Gew.-% bis ≤ 45 Gew.-%, vorliegt.

Beispiele für Kunststoffe, welche bevorzugt als Matrixmaterial dienen können, umfassen insbesondere thermoplastische Kunststoffe, beispielsweise Polyethylen oder Polypropylen oder Mischungen aus den vorgenannten Kunststoffen. Es kann weiterhin bevorzugt sein, dass das Matrixmaterial Polypropylen, etwa in Form von LDPE, umfasst, wobei das Polypropylen eine Mischung aus einem Homopolymer und einem Copolymer aufweisen kann. Insbesondere eine Mischung aus einem Homopolymer und einem Copolymer kann für das Matrixmaterial besonders vorteilhafte Eigenschaften ermöglichen, indem sie etwa in einem Bereich von ≥ 180°C bis ≤ 200°C zu einem Träger geformt werden können, so dass eine besonders effektive Prozessführung, etwa mit beispielhaften Liniengeschwindigkeiten in einem Bereich von 6m/min, ermöglicht werden kann. Ferner kann das Matrixmaterial grundsätzlich frei von einem Haftvermittler sein.

Als Copolymer kann beispielsweise ein solches Verwendung finden, das aus Propylen und Ethylen als Monomereinheiten aufgebaut ist, beispielsweise daraus besteht, wobei die Dichte des Copolymers größer oder gleich der Dichte des Homopolymers sein kann.

Durch das Verwenden eines Homopolymers kann insbesondere eine hohe Schmelzflussrate ermöglicht werden, wobei die Schmelzflussrate des Homopolymers insbesondere größer sein kann als die des Copolymers. Das kann eine besonders gute Formbarkeit des Trägers während des Herstellungsverfahrens ermöglichen. Ferner kann das Homopolymer dadurch ein besonders gutes Einbetten des Feststoffmaterials ermöglichen. Das Copolymer dagegen kann insbesondere der mechanischen Festigkeit des Trägermaterials beziehungsweise des Trägers dienen, da ein Copolymer oftmals eine insbesondere mit Bezug auf das Homopolymer vergleichsweise große Härte aufweist.

Mit Bezug auf die Verteilung von Homopolymer und Copolymer kann es bevorzugt sein, dass das Homopolymer bezogen auf das Polypropylen und gegebenenfalls bezogen auf das Matrixmaterial in einem Anteil von ≥ 10 Gew.-% bis ≤ 40 Gew.-%, beispielsweise in einem Anteil von ≥ 20 Gew.-% bis ≤ 30 Gew.-%, vorliegt und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, insbesondere wobei das Polypropylen aus dem Homopolymer und dem Copolymer besteht.

Das Feststoffmaterial liegt, bezogen auf das Trägermaterial, in einer Menge von ≥ 30 Gew.-% bis ≤ 75 Gew.-%, insbesondere von ≥ 40 Gew.-% bis ≤ 65 Gew.-%, insbesondere von ≥ 45 Gew.-% bis ≤ 60 Gew.-%, vor.

Bezüglich des Feststoffs, der in dem Matrixmaterial verteilt ist, kann dieser etwa eine Partikelgröße von weniger als 800 µm, bevorzugt von weniger als 600 µm, aufweisen. Dadurch kann der Feststoff sehr fein in dem Matrixwerkstoff verteilt sein. Der Feststoff kann beispielsweise ein Holzwerkstoff, wie beispielsweise Holzmehl, oder ein anderes Material sein, wie etwa ein Bestandteil der Reispflanze, etwa der Reis-Spelz, der Reis-Stengel und die Reis-Schale, Zellulose oder ein mineralisches Material, wie etwa Steinmehl, Kreide oder andere anorganische mineralische Materialien. Besonders bevorzugt kann es sein, wenn der Feststoff aus Talkum gebildet wird, beispielsweise daraus besteht. Grundsätzlich können die Feststoffe nicht beschränkend die Form von Schnitzeln, Spänen Mehl oder Körnern, also etwa pulverartig, vorliegen.

Bezüglich der Verwendung von Holz als Feststoff kann somit ein sogenannter WPC-Träger ausgestaltet werden, der grundsätzlich bekannt ist und eine große Akzeptanz besitzt. Somit kann insbesondere in dieser Ausgestaltung ein erfindungsgemäßer Träger durch eine Abwandlung an sich bekannter Produkte erfolgen.

Bezüglich der Verwendung von Talkum als Feststoff kann es von Vorteil sein, dass insbesondere in dieser Ausgestaltung eine hohe Stabilität ermöglicht werden kann. Darüber hinaus kann ein derartiges Trägermaterial eine verbesserte Feuchteresistenz ermöglichen, insbesondere mit einer reduzierten feuchte- oder hitzebedingten Quellung. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann. Vorteilhaft kann es sein, wenn die spezifische Oberflächendichte nach ISO 4352 (BET)) der Talkum-Partikel in einem Bereich liegt von ≥ 4 m²/g bis ≤ 8 m²/g, etwa in einem Bereich von ≥ 5 m²/g bis ≤ 7 m²/g. Weiterhin kann es vorteilhaft sein, wenn das Talkum bei einer Schüttdichte nach DIN 53468 vorliegt in einem Bereich von ≥ 0,15 g/cm³ bis ≤ 0,45 g/cm³, etwa in einem Bereich von ≥ 0,25 g/cm³ bis ≤ 0,35 g/cm³. Bevorzugt kann es vorgesehen sein, dass Talkum in Form von Partikeln vorliegt, die eine Partikelgröße D₅₀ aufweisen in einem Bereich von ≥ 3µm bis ≤ 6µm, vorzugsweise in einem Bereich von ≥ 4µm bis ≤ 5µm, beispielsweise von 4,5 µm, und/oder dass das Talkum in Form von Partikeln vorliegt, die eine Partikelgröße D₉₈ aufweisen in einem Bereich von ≥ 10µm bis ≤ 30µm, vorzugsweise in einem Bereich von ≥ 15µm bis ≤ 20µm, beispielsweise von 17 µm. Zur Bestimmung der Partikelgrößenverteilung kann grundsätzlich auf die allgemein bekannten Verfahren, wie beispielsweise die Laserdiffraktometrie, zurückgegriffen werden, mit welcher Partikelgrößen im Bereich von einigen Nanometern bis hin zu mehreren Millimetern bestimmt werden können. Mittels dieser Methode lassen sich auch D₅₀ bzw. D₉₈ Werte ermitteln, welche jeweils aussagen, dass 50% (D₅₀) bzw. 98% (D₉₈) der gemessenen Partikel kleiner sind als der jeweils angegebene Wert.

Alternativ kann es beispielsweise für Holz, insbesondere für Holzmehl vorgesehen sein, dass dessen Partikelgröße zwischen >0µm und ≤600µm mit einer bevorzugten Partikelgrößenverteilung D₅₀ von ≥400µm liegt.

In einer besonders bevorzugten Ausgestaltung kann es dabei von Vorteil sein, dass das Feststoffmaterial zu wenigstens 50 Gew.-%, etwa zu wenigstens 80 Gew.-%, insbesondere etwa zu wenigstens 90 Gew.-%, beispielsweise zu wenigstens 99 Gew.-% bezogen auf das Feststoffmaterial durch Talkum gebildet ist.

Bezüglich des vorbeschriebenen in dem Trägermaterial vorgesehenen Fasermaterial ist es vorgesehen, dass dieses in dem Trägermaterial, bezogen auf das Trägermaterial, in einer Menge von > 0 Gew.-% bis ≤ 20 Gew.-%, insbesondere von ≥ 3 Gew.-% bis ≤ 12 Gew.-%, vorliegt. Es hat sich gezeigt, dass bei einem vorbeschriebenen Trägermaterial, welches als Hauptbestandteile neben dem Fasermaterial das Matrixmaterial und das Feststoffmaterial aufweist, eine signifikant erhöhte Stabilität gegeben sein kann.

Insbesondere hat es sich gezeigt, dass der Bruchwert eines Trägers beziehungsweise eines Paneels, der beziehungsweise das aus einem derartigen Trägermaterial geformt ist, signifikant gesteigert werden kann. Dadurch kann die Stabilität signifikant gesteigert werden bereits dann, wenn das Fasermaterial in dem Trägermaterial in vergleichsweise geringen Mengen, wie etwa, bezogen auf das Trägermaterial, in einer Menge von > 0 Gew.-% bis ≤ 10 Gew.-%, insbesondere von ≥ 3 Gew.-% bis ≤ 5 Gew.-%, vorliegt. Dadurch können weitere Eigenschaften des Trägers, wie etwa eine geeignete Trittschalldämmung oder Ähnliches beibehalten werden, was ein besonders vorteilhaftes Eigenschaftsprofil eines aus einem derartigen Trägermaterial ausgestalteten Trägers erlauben kann.

Gleiches gilt für eine signifikante Verbesserung einer Verformung bei dauerhafter Belastung, was beispielsweise in dem sogenannten Rollstuhltest dargestellt werden kann. Insbesondere eine derartige verbesserte Stabilität gegenüber einer Verformung kann bezüglich einer Langzeitstabilität von Vorteil sein, was ein sehr gutes Erscheinungsbild und eine sehr gut Haptik auch nach einer vergleichsweise langen Benutzung des Paneels erlauben kann.

Darüber hinaus hat es sich gezeigt, dass ein vorbeschriebenes Trägermaterial die Herstellung eines Trägers erlaubt, wie dies nachstehend im Detail beschrieben ist, wobei der Träger eine besonders gute und insbesondere glatte Oberfläche aufweist. Dies kann insbesondere für das Aufbringen eines Dekors beziehungsweise einer Dekorschicht von Vorteil sein, etwa wenn das Dekor aufgedruckt wird, wie dies nachstehend im Detail beschrieben ist. Denn insbesondere in dieser Ausgestaltung kann ein hochwertiges Oberflächenbild des Dekors ermöglicht werden.

Es kann besonders bevorzugt sein, dass das Fasermaterial Fasern aufweist, die eine Länge in einem Bereich von ≤ 10µm, bevorzugt in einem Bereich von ≤ 5µm, etwa in einem Bereich von ≥ 2µm bis ≤ 5µm, etwa in einem Bereich von ≥ 3µm bis ≤ 4µm aufweisen. In überraschender Weise hat sich gezeigt, dass derartige Fasern eine hohe Stabilität ermöglichen können, wobei sich jedoch signifikante Vorteile bei der Herstellbarkeit ergeben können. So ist diese Ausgestaltung insbesondere in Abkehr von den Lösungen des Stands der Technik, bei welchen, insoweit Fasern in einem Material enthalten waren, eine vergleichsweise große Länge aufweisen, um einen gewünschten Effekt zu erzielen. Denn im Stand der Technik wurden meist Faserlängen im Milimeterbereich verwendet. In überraschender Weise hat sich herausgestellt, dass insbesondere in der vordefinierten Ausgestaltung des Trägermaterials mit Matrixmaterial, Feststoffmaterial und Fasermaterial in den vorbeschriebenen Mengenverhältnissen Fasern auch in dem vorbeschriebenen Bereich eine signifikante Verbesserung der Stabilität erlauben.

Dabei bietet eine derartige Ausgestaltung weiterhin den Vorteil einer verbesserten Herstellbarkeit. Denn es hat sich in überraschender Weise herausgestellt, dass insbesondere eine Vorbehandlung des Trägermaterials oder eine Erzeugung desselben in einem Extruder unter Verwendung eines Fasermaterials in diesem Längenbereich besonders vorteilhaft und problemlos erfolgen kann, wohingegen die Verwendung von Fasern mit einer größeren Länge, insbesondere im Milimeterbereich, wie dies im Stand der Technik oftmals gelehrt wird, problematisch sein kann.

Es kann weiterhin bevorzugt sein, dass das Fasermaterial Fasern aufweist, die einen Durchmesser beziehungsweise eine Stärke von ≥ 5µm bis ≤ 30µm, etwa in einem Bereich von ≥ 7µm bis ≤ 20µm aufweisen. Auch diese Ausgestaltung kann insbesondere in dem zuvor definierten Trägermaterial mit Matrixmaterial, Feststoffmaterial und Fasermaterial in den vorbeschriebenen Mengenverhältnissen eine signifikante Verbesserung der Stabilität erlauben, wobei eine Verarbeitbarkeit durch das Vorhandensein der Fasern nicht oder nicht signifikant verschlechtert wird. Somit kann auch in dieser Ausgestaltung ein qualitativ sehr hochwertiges Produkt ohne produktionsspezifische Nachteile ermöglicht werden.

Es kann weiterhin bevorzugt sein, dass das Fasermaterial Fasern aufweist, die ausgewählt sind aus der Gruppe bestehend aus pflanzlichen, tierischen, mineralischen oder auch künstlichen Fasern. Beispiele für pflanzliche Fasern umfassen beispielsweise Zellulosefasern, Lignosefasern sowie Fasern aus Stroh, Maisstroh, Bambus, Laub, Algenextrakten, Hanf, Baumwolle oder Ölpalmenfasern. Beispiele für tierische Faserwerkstoffe sind keratinbasierte Materialien wie z.B. Wolle oder Rosshaar. Aus den vorgenannten Fasern kann beispielsweise Zellulose von besonderem Vorteil sein. Beispiele für mineralische Faserwerkstoffe sind aus Mineralwolle oder Glaswolle. Beispiele für künstliche Fasern umfassen beispielsweise Kunststofffasern, wie etwa Fasern aus Polyester oder auch Polytetrafluorethylen (PTFE). Pflanzliche und tierische Fasern können den Vorteil einer besonders guten ökologischen Bilanz aufweisen, wohingegen mineralische Fasern oder künstliche Fasern bezüglich der Wärme- und Feuchteresistenz Vorteile aufweisen können.

Insoweit das Fasermaterial Kunststoffasern aufweist, kann es von Vorteil sein, dass die Schmelztemperatur der Kunststofffasern höher ist als die Schmelztemperatur des Matrixmaterials. Diese Ausgestaltung kann wiederum herstellungsspezifische Vorteile mit sich bringen. Denn zur Herstellung eines Trägers aus dem vordefinierten Trägermaterial kann es von Vorteil sein, das Trägermaterial beziehungsweise das Matrixmaterial aufzuschmelzen und unter Druck einen Träger zu formen, wie dies nachstehend beschrieben ist. In dieser Ausgestaltung kann bei einem derartigen Prozess es verhindert werden, dass die Kunststofffasern ebenfalls aufschmelzen, was die vorbeschriebenen Vorteile des Fasermaterials zumindest teilweise auslöschen könnte. Somit kann insbesondere in dieser Ausgestaltung ein gut prozessierbares Herstellungsverfahren unter Sicherstellung der gewünschten Eigenschaften ermöglicht werden. Beispielhafte Kunststofffasern umfassen beispielsweise Polytetrafluorethylen (PTFE).

Durch eine Beschränkung der Materialien des Trägermaterials und damit durch eine geringe Anzahl an Materialien zum Herstellen des Trägers kann der Träger besonders kostengünstig erzeugbar sein. Darüber hinaus kann die Prozessführung der Herstellung eines Trägers beziehungsweise eines Paneels sehr einfach sein, so dass auch die Herstellung einfach und kostenlos möglich ist.

Ein vorbeschriebener Träger insbesondere mit Talkum als Feststoff in einem Matrixmaterial, wie dies vorstehend beschrieben ist, bietet weiterhin insbesondere den Vorteil einer guten Feuchteresistenz. Insbesondere kann unter Verwendung eines Trägermaterials, wie dies vorstehend beschrieben ist, signifikant reduziert oder sogar vollständig verhindert werden, dass ein aus dem Trägermaterial hergestelltes Paneel bei Feuchteeinwirkung aufquillt. Ferner kann auch eine verbessere Wärmeformbeständigkeit gegeben sein, also etwa eine hitzebedingte Ausdehnung verhindert oder zumindest signifikant reduziert werden und die Verwendung von Talkum kann ferner Vorteile bezüglich des Elastizitätsmoduls, der Kriechfestigkeit.

Somit kann es vorteilhaft sein, dass das Trägermaterial zu einem Großteil aus dem Feststoffmaterial und dem Matrixmaterial und dem Fasermaterial besteht. Besonders bevorzugt kann es vorgesehen sein, dass das Matrixmaterial und das Fasermaterial und das Feststoffmaterial gemeinsam, bezogen auf das Trägermaterial, in einer Menge von ≥ 97 Gew.-%, etwa in einer Menge von 100 Gew.-%, vorliegen, das Trägermaterial somit aus dem Matrixmaterial und dem Feststoffmaterial und dem Fasermaterial besteht.

Besonders bevorzugt kann das Trägermaterial aus wenigstens einem polymeren insbesondere thermoplastischen Kunststoff etwa als Kunststoffmischung, etwa Polypropylen, als Matrixmaterial, Talkum, dem Fasermaterial, etwa Zellulose, und gegebenenfalls einem Haftvermittler bestehen. Insbesondere in dieser Ausgestaltung kann eine Herstellung besonders kostengünstig möglich sein und kann die Prozessführung besonders einfach sein.

Des Weiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen.

Gleichzeitig bietet das Trägermaterial den Vorteil, dass hiermit erzeugte Paneele eine sehr gute Stabilität aufweisen, so dass die Gefahr von Beschädigungen des Paneels während des Transports und während des Gebrauchs äußerst gering sind. Dies kann insbesondere durch das Feststoffmaterial erreicht werden, also insbesondere durch das enthaltene Talkum.

Ein aus dem Trägermaterial hergestellter Träger kann weiterhin problemlos mit einem Dekor versehen werden. Beispielsweise eignet sich ein derartiger Träger sehr gut für ein Bedrucken insbesondere mit einem Digitaldruckverfahren, beispielsweise einem Tintenstrahldruckverfahren. Dadurch lassen sich derartige Träger problemlos mit einem qualitativ hochwertigen Dekor versehen, was das Herstellen eines hochwertigen Paneels erlauben kann.

Mit Bezug auf weitere technische Merkmale und Vorteile des Trägers wird hiermit explizit auf die Beschreibung des Paneels, des Verfahrens und auf die Figuren verwiesen.

Die vorliegende Erfindung betrifft ferner ein dekoriertes Paneel, insbesondere ein dekoriertes Wand- oder Bodenpaneel, aufweisend einen Träger und eine auf den Träger aufgebrachte Dekorschicht, insbesondere wobei auf der Dekorschicht eine mit einer Struktur versehene Deckschicht aufgebracht ist. Ein derartiges Paneel ist dadurch gekennzeichnet, dass der Träger wie vorstehend im Detail beschrieben ausgestaltet ist. Mit Bezug auf die spezifischen Merkmale wird somit auf die vorstehende Beschreibung verwiesen.

Die Randbereiche des Paneels können strukturiert beziehungsweise profiliert sein, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Zusammenfassend kann das vorbeschriebene Paneel den Vorteil einer hohen Dimensionsstabilität mit Bezug auf Hitze- und Feuchtigkeitseinfluss bei gleichzeitig guten mechanischen Eigenschaften beziehungsweise einer guten mechanischen Stabilität und leichtem Gewicht bieten. Ferner kann ein derartiges Paneel sehr stabil sein und gleichzeitig eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann.

Mit Bezug auf weitere technische Merkmale und Vorteile des Paneels wird hiermit explizit auf die Beschreibung des Trägermaterials, des Verfahrens und auf die Figuren verwiesen.

Gegenstand der vorliegenden Erfindung ist ferner ein Verfahren zum Herstellen eines dekorierten Wand- oder Bodenpaneels, aufweisend die Verfahrensschritte:
a) Bereitstellen eines schüttfähigen Trägermaterials, wie dies vorstehend im Detail beschrieben ist,
b) Insbesondere Anordnen des Trägermaterials zwischen zwei bandartigen Fördermitteln,
c) Formen des Trägermaterials unter Einwirkung von Temperatur und Druck unter Ausbildung eines insbesondere bahnförmigen Trägers,
d) gegebenenfalls Abkühlen des Trägers,
e) gegebenenfalls Aufbringen eines Dekoruntergrunds auf zumindest einen Teilbereich des Trägers (36);
f) gegebenenfalls Aufbringen einer eine Dekorvorlage nachbildenden Dekorschicht auf zumindest einen Teilbereich des Trägers, und
g) gegebenenfalls Aufbringen einer Deckschicht auf zumindest einen Teilbereich der Dekorschicht.

Wie es für den Fachmann unmittelbar ersichtlich ist, dienen die Verfahrensschritte a) bis c) dem Herstellen eines Trägers für ein dekoriertes Wand- oder Bodenpaneel, also für einen definierten Teil eines Verfahrens zum Herstellen eines dekorierten Wand- oder Bodenpaneels, wobei letzteres durch die zusätzlichen Schritte d) bis g) fertig gestellt werden kann.

Bezüglich der Vorteile des Trägers wird auf die vorstehende Beschreibung verwiesen.

Gemäß Verfahrensschritt a) erfolgt somit ein Bereitstellen eines granularen Trägermaterials, wobei das Trägermaterial ein kunststoffhaltiges Matrixmaterial, ein Fasermaterial und ein Feststoffmaterial umfasst. Das granulare Trägermaterial kann dabei in vorgefertigten Trägermaterial-Partikeln bereitgestellt werden, wobei die Partikel bereits in das Matrixmaterial eingeschmolzenen Feststoff und Fasermaterial umfassen. Derartige Trägermaterial-Partikel können beispielsweise erhältlich sein durch einen Extrusionsvorgang.

In anderen Worten kann es vorgesehen sein, dass Verfahrensschritt a) das Verarbeiten einer Rohmaterialmischung in einem Extruder, insbesondere Zweischneckenextruder, umfasst. Dabei können Partikel des Trägermaterials anfallen, die einen maximalen Durchmesser im Milimeterbereich aufweisen, etwa in einem Bereich von ≥1mm bis ≤ 10mm.

Diesbezüglich kann es vorgesehen sein, dass Verfahrensschritt a) ausgeführt wird, indem eine Rohmaterialmischung aus dem Matrixmaterial, dem Fasermaterial und dem Feststoffmaterial jeweils als eigenständige beziehungsweise als jeweils unterschiedliche Phase in einen Extruder eingebracht und dort verarbeitet wird. In dieser Ausgestaltung kann somit eine Mischung aus dem Fasermaterial, dem Matrixmaterial und dem Feststoffmaterial in den Extruder gegeben und dadurch Partikel des Trägermaterials erhalten werden. Diese Ausgestaltung kann eine besonders einfache Prozessführung und dabei eine besonders einfache Adaptierbarkeit erlauben. Letzteres gilt insbesondere dann, wenn das Verhältnis der einzelnen Komponenten zueinander verändert werden soll.

Alternativ kann es vorgesehen sein, dass ein vorgefertigtes Kompositmaterial aus dem Fasermaterial und dem Matrixmaterial gemeinsam mit dem Feststoffmaterial als Rohmaterialmischung in einem Extruder verarbeitet wird. In dieser Ausgestaltung wird somit zunächst das Fasermaterial in das Matrixmaterial eingearbeitet unter Erhalt eines Kompositmaterials aufweisend das Matrixmaterial mit darin verteiltem Fasermaterial. Dieses Kompositmaterial kann anschließend mit dem Feststoffmaterial in dem Extruder verarbeitet werden. Es hat sich in überraschender Weise herausgestellt, dass insbesondere in dieser Ausgestaltung sich ein Träger formen lässt, der eine besonders glatte Oberfläche aufweist und dadurch etwa für das spätere Aufbringen einer Dekorschicht besonders geeignet ist. Darüber hinaus kann diese Ausgestaltung mit einer geringeren Anzahl an Streuköpfen auskommen, was anlagentechnisch Vorteile bringen kann.

Unter einem granularen Trägermaterial kann dabei ein Feststoff beziehungsweise ein Haufwerk eines Feststoffs verstanden werden, welcher eine Vielzahl fester Partikel, wie etwa Körner oder Kugeln, umfasst beziehungsweise daraus besteht. Beispielhaft aber nicht abschließend seien hier körnige oder pulverförmige Materialien genannt. Das Trägermaterial ist dabei das Material, aus welchem der Träger ausgestaltet ist, insbesondere woraus der Träger besteht. Bezüglich des verwendeten Trägermaterials wird dabei auf die vorstehende Beschreibung des Paneels beschrieben.

Gemäß Verfahrensschritt b) kann das Trägermaterial zwischen zwei bandartigen Fördermitteln angeordnet werden und gemäß Verfahrensschritt c) unter Einwirkung von Temperatur und Druck unter Ausbildung eines bahnförmigen Trägers geformt.

Beispielsweise kann das granulare Trägermaterial zwischen zwei bandartigen Fördermitteln angeordnet werden, die umlaufend verfahren werden, so dass zwischen den Fördermitteln der Träger durch Einwirkung von Druck und Wärme, insbesondere unter zumindest teilweisem Aufschmelzen des Matrixmaterials, geformt werden kann. Das Trägermaterial kann so auf das untere Fördermittel aufgebracht werden und anschließend durch das untere und das obere Fördermittel begrenzt werden. Beispielsweise können die Fördermittel eine oder eine Mehrzahl an Presseinrichtungen und Heizeinrichtungen und gegebenenfalls Kühleinrichtungen durchlaufen, um den Träger so in geeigneter Weise formen zu können. Dabei können die bandartigen Fördermittel zumindest teilweise aus Polytetrafluorethylen (PTFE) ausgestaltet sein. Beispielsweise können die Bänder vollständig aus Polytetrafluorethylen geformt sein, oder es können etwa glasfaserverstärkte Kunststoffbänder oder Stahlbänder mit einer Beschichtung aus Polytetrafluorethylen Verwendung finden.

In einem weiteren Schritt erfolgt beispielsweise nach dem Anordnen des Trägermaterials ein Formen des zwischen den bandartigen Fördermitteln angeordneten Trägermaterials unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es den zwischen den Fördermitteln sich ausbildenden Aufnahmeraum ausfüllen und so einen etwa bahnförmigen Träger ausbilden, der weiter behandelt werden kann.

Als Presseinrichtungen können beispielsweise Walzen und/oder eine Zweibandpresse Verwendung finden. Insoweit eine Zweibandpresse als Presseinrichtung verwendet wird, können in dieser als abschließender Schritt bei der Trägerherstellung insbesondere die Oberflächeneigenschaften des Trägers mit geringem Druck und geringer Komprimierung eingestellt werden in einem sehr geringen Bereich, wie etwa einer Komprimierung von ≤ 7%, beispielsweise ≤ 5%.

Nach dem Durchlaufen der Press- und/oder Heizeinrichtungen, wie etwa einer Zweibandpresse, kann der erzeugte Träger zunächst in bahnartiger Form oder als vereinzelte plattenartige Träger als Zwischenprodukt gelagert werden und das Verfahren kann zunächst beendet sein. Vorzugsweise schließen sich jedoch unmittelbar weitere Behandlungsschritte an.

Zur Herstellung eines fertigen Paneels kann der zuvor erzeugte Träger folgend mit einem Dekor beziehungsweise einer Dekorschicht versehen und dieses mit einer Schutzschicht beziehungsweise einer Verschleiß- oder Deckschicht beschichtet werden.

Um ein Dekor beziehungsweise eine Dekorschicht aufzubringen, kann zunächst gemäß Verfahrens schritt e) ein Dekoruntergrund auf zumindest einen Teilbereich des Trägers aufgebracht werden. Beispielsweise kann zunächst ein Primer insbesondere für Druckverfahren als Dekoruntergrund aufgebracht werden, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Zusätzlich zu dem Primer kann ein weiß gefärbter Haftgrund aufgebracht werden. Beispielsweise kann der Haftgrund Polyurethan aufweisen, etwa als Polyurethanlack ausgestaltet sein, und etwa mit weißen Pigmenten versehen sein.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ferner kann auf das Papier ein Harz als Druckuntergrund aufgebracht werden, welche als Harzkomponente wenigstens eine Verbindung aufweisen kann ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser.

Anschließend kann das Dekor beziehungsweise die Dekorschicht gemäß Verfahrensschritt f) insbesondere durch einen Druckvorgang erzeugt werden, wobei sowohl für Flexo-Druck, Offset-Druck oder Siebdruckverfahren, als auch insbesondere Digitaldrucktechniken, wie beispielsweise Inkjet-Verfahren oder Laserdruck-Verfahren geeignet sind. Die Dekorschicht kann aus einer insbesondere strahlungshärtbaren Farbe und/oder Tinte ausgebildet werden. Beispielsweise kann eine UV-härtbare Farbe oder Tinte verwendet werden.

Es kann ferner gegebenenfalls zunächst etwa vor dem Bedrucken ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Bezüglich der Verschleiß- beziehungsweise Deckschicht, welche gemäß Verfahrensschritt g) aufgebracht wird, oberhalb der Dekorschicht kann es vorgesehen sein, dass diese als vorproduzierte Overlayschicht, etwa basierend auf Melamin, auf den bedruckten Träger aufgelegt und mit diesem durch Druck- und/oder Wärmeeinwirkung verbunden wird. Ferner kann es bevorzugt sein, dass zur Ausbildung der Verschleiß- und/oder Deckschicht ebenfalls eine strahlungshärtbare Zusammensetzung, wie beispielsweise ein strahlungshärtbarer Lack, wie einem Acryllack, aufgebracht wird. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann die Auftragung beispielsweise mittels Walzen, wie Gummiwalzen oder mittels Gießvorrichtungen aufgetragen werden.

Insbesondere kann in die Deckschicht eine Strukturierung, insbesondere eine mit dem Dekor übereinstimmende Oberflächenstrukturierung durch das Einbringen von Poren eingebracht werden. Dies kann beispielsweise durch das Einprägen entsprechender Strukturen realisiert werden.

Es kann besonders bevorzugt sein, wenn die Deckschicht, etwa mittels eines Tintenstrahldruckers, und/oder durch einen Mehrfachauftrag, auf die Oberfläche aufgedruckt wird, da so höchst genaue Strukturen erzeugt werden können.

Die Erfindung ist nachfolgend anhand der Figur sowie eines Ausführungsbeispiels weiter erläutert.

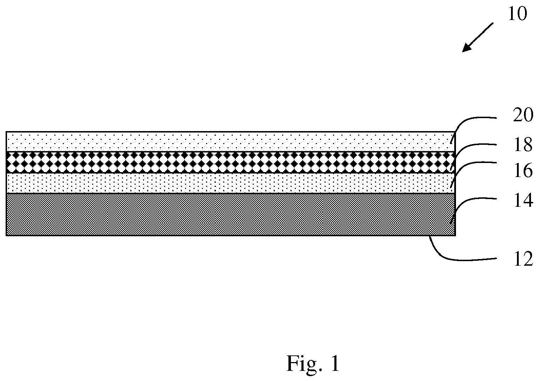

Fig. 1 zeigt schematisch eine Ansicht eines dekorierten Paneels mit einem Träger 12 aus einem Trägermaterial gemäß der Erfindung.

Figur 1 zeigt schematisch eine Ansicht eines dekoriertes Wand- oder Bodenpaneels 10. Das Wand- oder Bodenpaneel 10 umfasst einen Träger 12, der aus einem Trägermaterial 14 geformt ist.

Dabei ist es vorgesehen, dass das Trägermaterial 14 ein einen Kunststoff aufweisendes Matrixmaterial, ein Feststoffmaterial und ein Fasermaterial aufweist, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial 14, von ≥ 30 Gew.-% bis ≤ 70 Gew.-%, insbesondere von ≥ 40 Gew.-% bis ≤ 60 Gew.-%, vorliegt und wobei das Feststoffmaterial, bezogen auf das Trägermaterial 14, in einer Menge von ≥ 30 Gew.-% bis ≤ 65 Gew.-%, insbesondere von ≥ 35 Gew.-% bis ≤ 55 Gew.-%, vorliegt und wobei das Fasermaterial, bezogen auf das Trägermaterial 14, in einer Menge von > 0Gew.-% bis ≤ 10 Gew.-%, insbesondere von ≥ 3 Gew.-% bis ≤ 5 Gew.-%, vorliegt und wobei das Matrixmaterial, das Fasermaterial und das Feststoffmaterial gemeinsam, bezogen auf das Trägermaterial 14, in einer Menge von ≥ 95 Gew.-%, insbesondere ≥ 97 Gew.-%, vorliegen.

Auf dem Träger 12 ist ein Druckuntergrund 16 vorgesehen, der als Untergrund für eine insbesondere gedruckte Dekorschicht 18 dient. Auf der Dekorschicht 18 ist eine Deckschicht 20 vorgesehen, welche mehrlagig aufgebaut sein kann und einen mit dem Dekor der Dekorschicht 18 übereinstimmense Struktur aufweisen kann.

### Bezugszeichen:

- 10: Wand- oder Bodenpaneel
- 12: Träger
- 14: Trägermaterial
- 16: Druckuntergrund
- 18: Dekorschicht
- 20: Deckschicht

## Patentansprüche

1. Trägermaterial zur Herstellung eines Trägers (12) für ein dekoriertes Wand- oder Bodenpaneel (10), wobei das Trägermaterial (14) ein einen Kunststoff aufweisendes Matrixmaterial, ein Feststoffmaterial und ein Fasermaterial aufweist, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial, von ≥ 20 Gew.-% bis ≤ 70 Gew.-%, insbesondere von ≥ 30 Gew.-% bis ≤ 55 Gew.-%, insbesondere von ≥ 35 Gew.-% bis ≤ 45 Gew.-%, vorliegt und wobei das Feststoffmaterial, bezogen auf das Trägermaterial, in einer Menge von ≥ 30 Gew.-% bis ≤ 75 Gew.-%, insbesondere von ≥ 40 Gew.-% bis ≤ 65 Gew.-%, insbesondere von ≥ 45 Gew.-% bis ≤ 60 Gew.-%, vorliegt und wobei das Fasermaterial, bezogen auf das Trägermaterial, in einer Menge von > 0 Gew.-% bis ≤ 15 Gew.-%, insbesondere von ≥ 3 Gew.-% bis ≤ 20 Gew.-%, vorliegt, und wobei das Matrixmaterial, das Fasermaterial und das Feststoffmaterial gemeinsam, bezogen auf das Trägermaterial (20), in einer Menge von ≥ 95 Gew.-%, insbesondere ≥ 97 Gew.-%, vorliegen.

2. Trägermaterial nach Anspruch 1, **dadurch gekennzeichnet, dass** das Fasermaterial Fasern aufweist, die eine Länge in einem Bereich von ≤ 10µm, bevorzugt ≤ 5µm, aufweisen.

3. Trägermaterial nach Anspruch 1 oder 2, **dadurch gekennzeichnet, dass** das Fasermaterial Fasern aufweist, die einen Durchmesser in einem Bereich von ≥ 5µm bis ≤ 30µm, etwa in einem Bereich von ≥ 7µm bis ≤ 20µm, aufweisen.

4. Trägermaterial nach einem der Ansprüche 1 bis 3, **dadurch gekennzeichnet, dass** das Fasermaterial Fasern aufweist, die ausgewählt sind aus der Gruppe bestehend aus pflanzlichen, tierischen, mineralischen oder auch künstlichen Fasern.

5. Trägermaterial nach Anspruch 4, **dadurch gekennzeichnet, dass** das Fasermaterial Kunststoffasern aufweist, wobei die Schmelztemperatur der Kunststofffasern höher ist als die Schmelztemperatur des Matrixmaterials.

6. Trägermaterial nach einem der Ansprüche 1 bis 5, **dadurch gekennzeichnet, dass** das Matrixmaterial Polypropylen umfasst, wobei das Polypropylen eine Mischung aus einem Homopolymer und einem Copolymer aufweist.

7. Trägermaterial nach Anspruch 6, **dadurch gekennzeichnet, dass** das Homopolymer, bezogen auf das Polypropylen, in einem Anteil von ≥ 10 Gew.-% bis ≤ 40 Gew.-%, beispielsweise in einem Anteil von ≥ 20 Gew.-% bis ≤ 30 Gew.-%, vorliegt, und/oder dass das Copolymer bezogen auf das Polypropylen in einem Anteil von ≥ 60 Gew.-% bis ≤ 90 Gew.-%, beispielsweise in einem Anteil von ≥ 70 Gew.-% bis ≤ 80 Gew.-%, vorliegt.

8. Trägermaterial nach einem der Ansprüche 6 oder 7, **dadurch gekennzeichnet, dass** die Dichte des Copolymers größer oder gleich der Dichte des Homopolymers ist.

9. Dekoriertes Paneel, insbesondere dekoriertes Wand- oder Bodenpaneel (10), aufweisend einen Träger (12) und eine auf den Träger (12) aufgebrachte Dekorschicht (18), insbesondere wobei auf der Dekorschicht (18) eine mit einer Struktur versehene Deckschicht (20) aufgebracht ist, **dadurch gekennzeichnet, dass** der Träger (12) ein Trägermaterial (14) nach einem der Ansprüche 1 bis 8 aufweist.

10. Verfahren zur Herstellung eines dekorierten Wand- oder Bodenpaneels (10), aufweisend die Verfahrensschritte:
a) Bereitstellen eines schüttfähigen Trägermaterials (14) gemäß einem der Ansprüche 1 bis 8,
b) Insbesondere Anordnen des Trägermaterials (14) zwischen zwei bandartigen Fördermitteln,
c) Formen des Trägermaterials (14) unter Einwirkung von Temperatur und Druck unter Ausbildung eines insbesondere bahnförmigen Trägers (12),
d) gegebenenfalls Abkühlen des Trägers (12),
e) gegebenenfalls Aufbringen eines Dekoruntergrunds (16) auf zumindest einen Teilbereich des Trägers (12);
f) Aufbringen einer eine Dekorvorlage nachbildenden Dekorschicht (18) auf zumindest einen Teilbereich des Trägers (12), und
g) Aufbringen einer Deckschicht (20) auf zumindest einen Teilbereich der Dekorschicht (18).

11. Verfahren nach Anspruch 10, **dadurch gekennzeichnet, dass** Verfahrensschritt a) das Verarbeiten einer Rohmaterialmischung in einem Extruder umfasst.

12. Verfahren nach Anspruch 11, **dadurch gekennzeichnet, dass** ein vorgefertigtes Kompositmaterial aus dem Fasermaterial und dem Matrixmaterial gemeinsam mit dem Feststoffmaterial als Rohmaterialmischung in einem Extruder verarbeitet wird.

13. Verfahren nach Anspruch 11, **dadurch gekennzeichnet, dass** Verfahrensschritt a) ausgeführt wird, indem eine Rohmaterialmischung aus dem Matrixmaterial, dem Fasermaterial und dem Feststoffmaterial als jeweils unterschiedliche Phase in einem Extruder verarbeitet wird.

14. Verfahren nach einem der Ansprüche 10 bis 13, **dadurch gekennzeichnet, dass** das Fasermaterial ausgewählt ist aus der Gruppe bestehend aus pflanzlichen, tierischen, mineralischen oder auch künstlichen Fasern.

15. Verfahren nach einem der Ansprüche 10 bis 14, **dadurch gekennzeichnet, dass** als Matrixmaterial Polypropylen verwendet wird und/oder dass als Feststoffmaterial Talkum verwendet wird.
